# EUROPEAN PATENT APPLICATION

(11) **EP 4 239 241 A1**
(43) Date of publication of application: **06.09.2023**
(21) Application number: 22159468.2
(22) Date of filing: 01.03.2022
(51) Int. Cl.: F21S 8/04, F21V 21/03, F16B 21/16, F16B 1/00

(54) **A LUMINAIRE KIT**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

An approach for mounting a luminaire (1) against a surface. A luminaire kit (1000), having a luminaire (1) is provided. A mounting arrangement (4) is coupled to the surface and a locking mechanism (2) is used to connect the luminaire (1) to the mounting arrangement (4). The locking mechanism (2) includes a shell structure (9), connectable to the luminaire (1), and a locking element (11), which is movable (using a magnet) between at least a first and second position within the shell structure (9). A lock catch mechanism (10) is configured to, when the locking element (11) is in the first position, prevent/restrict a movement of the shell structure (9) (and therefore the luminaire (1)), in a direction away from the mounting arrangement (4). When the locking element (11) is in the second position, the lock catch mechanism (10) releases the shell structure (9).

## Description

### FIELD OF THE INVENTION

This invention relates to the field of luminaires, and in particular to the installation of luminaires in a ceiling or other surface.

### BACKGROUND OF THE INVENTION

Panel-type luminaires are a common choice for installation in ceiling or other surfaces, as they provide advantages of simplicity, lightness and thinness. One particular environment of interest for using such luminaires is a cleanroom environment. Existing panel-type luminaires have two main methods of installation: embedded and ceiling-mounted.

For embedded installation, a gap will form between the lamp and the ceiling. For cleanrooms, in order to meet the necessary requirements of cleanliness, this gap is usually sealed with glue or a sealant such as silicone. This requirement is inconvenient for an installer, and has an unsightly appearance. In addition, the glue/sealant must be removed when the lamp is replaced, which is extremely inconvenient for maintenance.

For ceiling installations, the most commonly used installation method is to first fix the mounting bracket to the ceiling, and then push the lamp against the ceiling from the side and then snap it to the barb of the bracket. However, during the push-in process, the lamp will rub against the ceiling, which may scratch the ceiling. Moreover, during maintenance, the lamp needs to be slid out of the barb of the bracket. As the lamp is typically smooth in shape, this makes maintenance extremely inconvenient. Furthermore, it is common for this installation approach to also create an installation gap between the lamp and the ceiling. As with embedded installations, for cleanrooms, this gap will need to be sealed (e.g. using glue or sealant). This increases a complexity of installation, affects the appearance of the installed luminaire, and increases a difficulty and inconvenience of maintenance, as the glue/sealant would need to be removed.

There is therefore a clear desire for an installation assembly for a clean panel-type luminaire that can be seamless, fast to install and reliably and convenient to maintain.

### SUMMARY OF THE INVENTION

The invention is defined by the claims.

According to examples in accordance with an aspect of the invention, there is provided a luminaire kit comprising: a luminaire; a mounting arrangement comprising a mounting plate, for fixing against a surface, and a fixed column extending outwardly from the mounting plate; a locking mechanism comprising: a luminaire fixing element or securing the luminaire thereto; a shell structure coupled or couplable to the luminaire fixing element and comprising a tube having a cavity sized to allow the passage of the fixed column therein; a locking element sized to fit within the cavity and comprising a magnetically-responsive material configured to facilitate control of the movement of the locking element within the cavity, between at least a first and a second position, using a magnet; and a lock catch mechanism configured to, when the fixed column is positioned in the cavity of the tube: secure the locking element to the fixed column when the locking element is at the first position within the cavity, wherein, when in the first position and secured to the fixed column, the locking element restricts or prevents a movement of the shell structure in a direction away from the mounting arrangement; and disconnect the locking element from the fixed column when the locking element is at the second position within the cavity, wherein, when in the second position, the locking element does not restrict a movement of the shell structure in a direction away from the mounting arrangement.

The proposed installation assembly provides a new mechanism for securing a luminaire to a surface, such as a ceiling, floor or wall.

In particular, the mounting arrangement may be coupled to the surface via the mounting plate. The mounting arrangement can be secured to the locking element via the lock catch mechanism and the fixed column. When secured to the mounting arrangement, the locking element restricts or prevents a movement of the shell structure in a direction away from the mounting arrangement. This in turn restricts movement of a luminaire secured to the luminaire fixing element (which is coupled to the shell structure). In this way, the luminaire is effectively coupled to the mounting arrangement to restrict the movement of the luminaire in a direction away from the mounting arrangement.

Use of a magnet to move the locking element increases an ease of maintaining the luminaire, as it allows the locking element to be easily moved from an external source, to thereby disengage the lock catch mechanism. This thereby disconnects or dismounts the locking mechanism (and therefore the luminaire) from the mounting arrangement.

Use of a magnet avoids the need for control systems (e.g. a pulley system or the like) to control the position of the locking element. Another advantage of using an external magnet is that, the front surface of the luminaire can be an intact smooth surface (at least nearby the mounting arrangement), especially useful in e.g., cleanrooms or hospitals, etc., because this reduces a number of possible entry points for dust or moisture into or out from the mounting arrangement of the luminaire.

The mounting arrangement and the locking mechanism may together form an installation assembly for the luminaire. Some luminaires may benefit (for increased security of mounting) from more than one installation assembly. Thus, the luminaire kit may comprise a luminaire and one or more installation assemblies.

The luminaire may comprise a panel luminaire.

The locking mechanism may further comprise a biasing element configured to bias the locking element towards the first position.

This embodiment facilitates ease of installation, as the locking mechanism can be simply pressed against the fixed column of the mounting arrangement, which will then automatically engage with the lock catch mechanism and thereby prevent/restrict movement of a luminaire (connected to the fixing arrangement) away from the mounting arrangement.

In particular, use of a biasing element pushes the locking element towards the first position as the fixed column is moved into the locking element. When the fixed column is sufficiently inserted such the lock catch mechanism can operate, the lock catch mechanism engages with the fixed column, to thereby secure the locking element to the fixed column.

Using a biasing element in this way avoids a need for manual control over the position of the locking element during installation of the luminaire to the mounting arrangement.

The biasing element may be a spring. This provides a simple and low-cost mechanism for a biasing element. Other suitable examples might include, for instance, an elastic, pneumatic or hydraulic biasing element.

In some examples, the lock catch mechanism comprises one or more balls configured to move with the locking element; and when the locking element is in the first position, the one or more balls engage the fixed column and the locking element together, to thereby secure the locking element to the fixed column.

The one or more balls may be made of steel. Other suitable materials include plastic, ceramic or other forms of metal. Steel is particularly advantageous in providing a reliable and secure mechanism due to the strength of the material and its relative inertness.

In some examples, the locking element comprises a second tube having a second cavity sized to allow the passage of the fixed column therethrough, wherein the second tube comprises one or more holes on its sidewall; and the one or more balls of the lock catch mechanism are configured to move with the locking element, the one or more balls consists of, for each hole of the second tube, a respective ball that is shaped to partially fit inside a respective hole of the second tube

Optionally, each hole of the second tube passes entirely through the second tube; and for each of the one or more balls, the diameter of the ball is larger than the depth of hole of the second tube in which the ball is at least partially housed; and an internal surface of the tube is tapered towards the mounting arrangement to thereby press each of the one or more balls, through a respective hole of the second tube, towards the fixed column as the second tube moves through the cavity of the tube towards the mounting arrangement.

In some embodiments, the fixed column comprises one or more grooves. The groove(s) may be positioned such that, when the one or more balls engage with the fixed column, the balls are at least partially housed by the grooves.

The cavity of the tube may be tapered towards the mounting arrangement such that each of the one or more balls moves, through a respective hole of the second tube, towards the fixed column as the second tube moves through the cavity of the tube towards the mounting arrangement under the influence of a magnet.

In some examples, the fixed column comprises a respective one or more fixing points; and the lock catch mechanism is configured to, when the locking element is in the first position, secure the locking element to the one or more fixing points of the fixed column and disconnect the locking element from the one or more fixing points as the locking element moves from the first position to the second position.

Where present, the grooves may act as the fixing points for the lock catch mechanism. Other examples include protrusions with which the lock catch mechanism could engage.

In some embodiments, the fixed column, the shell structure and the locking element are configured such that, when the lock catch mechanism secures the locking element to the fixed column, the locking element abuts the shell structure to thereby restrict or prevent a movement of the shell structure in a direction away from the mounting arrangement.

In some embodiments, the shell structure and the locking element are configured such that, when the lock catch mechanism secures the locking element to the fixed column, the shell structure abuts the mounting plate of the mounting arrangement to thereby restrict or prevent a movement of the shell structure in a direction towards the mounting arrangement.

This approach further reduces a range of possible movement in an axis perpendicular to the mounting plate, in particular towards the mounting plate. Thus, a more secure mounting of the luminaire to the mounting arrangement is achieved.

Optionally, the shell structure further comprises a first cover positioned at a first end of the tube, having an aperture sized to allow the passage of the fixed column through to the cavity. The first cover may comprise a recess surrounding and inclined towards the aperture for guiding the fixed column towards the aperture. Thus, a bottom of the recess, being a part of the recess furthest from the other part(s) of the first cover, may contain the aperture.

In one example, the luminaire fixing element comprises: a third tube, sized to house the shell structure, and comprising one or more side holes; and a fixing ring positioned around the third tube and configured to extend through each of the side holes to clamp the shell structure when the shell structure is positioned within the third tube, to thereby restrict a movement of the shell structure and the locking element in a direction perpendicular to the direction of the fixed column. Restricting a movement of the locking mechanism perpendicularly to the fixed column is advantageous in providing a more secure and reliable fixing of the luminaire to the installation assembly. The fixing ring may be made of an elastic or spring material.

The shell structure may comprise a flange element configured to restrict or prevent a movement of the fixing arrangement, with respect to the shell structure, when the shell structure is positioned in the third tube. The flange element may act as a point of contact between the locking mechanism and the coupling arrangement of the fixing arrangement. In particular, the flange element may act to prevent movement of the fixing arrangement (and therefore the luminaire) in a direction away from the mounting arrangement. This helps secure the luminaire to the mounting arrangement.

Movement of the locking element between the first and second positions may be a movement in a direction towards and/or away from the mounting arrangement.

In some examples, a second end of the tube of the shell structure, being the end furthest from the mounting arrangement, is capped with a second cover.

These and other aspects of the invention will be apparent from and elucidated with reference to the embodiment(s) described hereinafter

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a luminaire kit;
Figure 2 provides an exploded view of a mounting portion of the luminaire kit of Figure 1;
Figure 3 provides a cross-sectional view of the mounting portion of the luminaire kit of Figure 1, at its installed status;
Figure 4 provides another (cut-off) view of the mounting portion of the luminaire kit of Figure 1, at its released status.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an approach for mounting a luminaire against a surface. A luminaire kit, having a luminaire is provided. A mounting arrangement is coupled to the surface and a locking mechanism is used to connect the luminaire to the mounting arrangement. The locking mechanism includes a shell structure, connectable to the luminaire, and a locking element, which is movable (using a magnet) between at least a first and second position within the shell structure. A lock catch mechanism is configured to, when the locking element is in the first position, prevent/restrict a movement of the shell structure (and therefore the luminaire), in a direction away from the mounting arrangement. When the locking element is in the second position, the lock catch mechanism releases the shell structure.

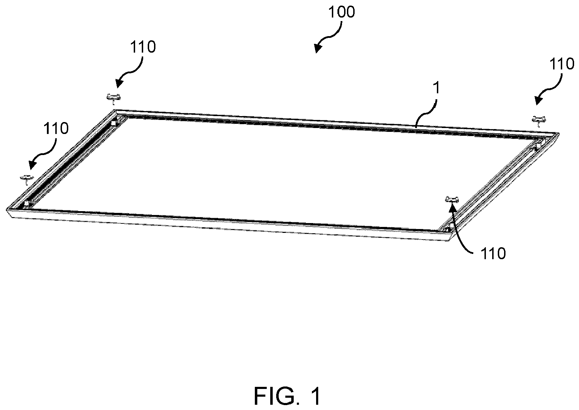

Figure 1 illustrates a luminaire kit 1000 according to an embodiment. The luminaire kit 1000 comprises a luminaire 1 and a plurality of mounting portions 110. Each mounting portion 110 comprises a mounting arrangement and a locking mechanism as later described.

This embodiment demonstrates how more than one mounting portion 110 may be used to mount a single luminaire 1 to a surface. However, it will be appreciated that other, e.g. smaller, luminaires may require fewer mounting portions (e.g. a single mounting portion) and yet other, e.g. larger, luminaires may require more mounting portions.

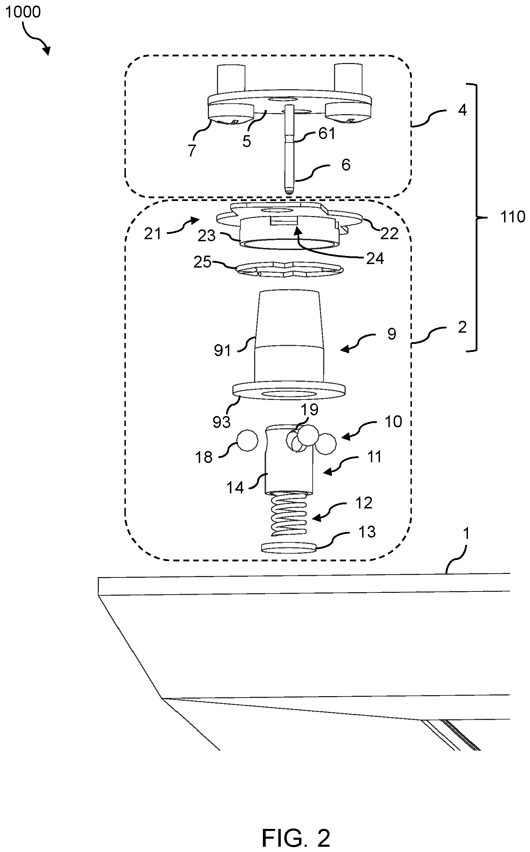

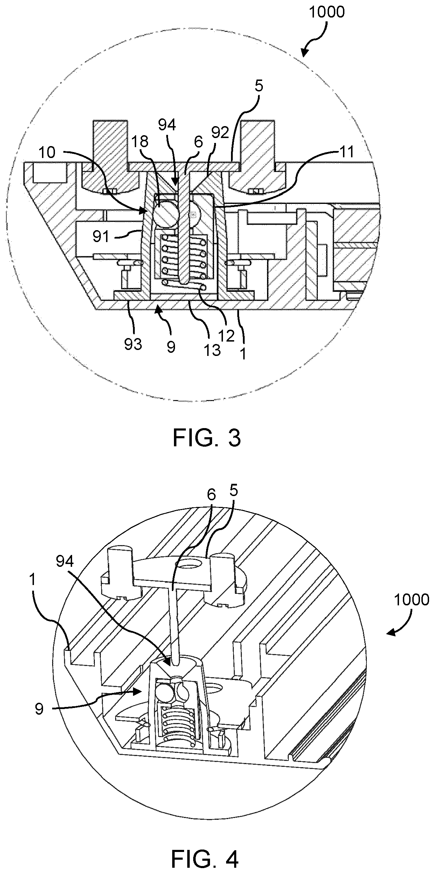

Figures 2, 3 and 4 all illustrate the mounting portion 110 of a luminaire kit according to an embodiment. Figure 2 provides an exploded view of the mounting portion 110 of the luminaire kit. Figure 3 provides a cross-sectional view of part of an assembled luminaire kit. Figure 4 provides another view of part of the luminaire kit.

The luminaire kit 1000 comprises a luminaire 1 and a mounting portion 110 formed of a mounting arrangement 4 and a locking mechanism 2.

The luminaire 1 comprises any suitable luminaire for securing or fixing against a surface, such as a ceiling, wall or floor. For instance, the luminaire may be a panel luminaire, a troffer or the like.

The mounting arrangement 4 is configured for fixing against a surface. The mounting arrangement 4 comprises a mounting plate 5 and a fixed column 6 that extends outwardly from the mounting plate 5.

The mounting plate 5 is configured for fixing against the surface. One or more mounting elements 7 may be used to fix the mounting plate 5 to the surface. Here, each mounting element 7 comprises a screw, which is received by a corresponding receiving thread (not shown) mounted in the surface. However, other mounting elements could be used, e.g. one or more clipping mechanisms or nails could be used.

The fixed column 6 is a protrusion or shaft that extends outwardly from the mounting plate. The fixed column 6 is therefore an elongate piece of material extending from the mounting plate 5. Preferably, and as illustrated, the fixed column 6 is perpendicular to a plane in which the mounting plate 5 lies, however this is not essential.

The locking mechanism 2 is configured to secure/connect to the luminaire 1, and to be releasably connectable to the fixed column 6. The locking mechanism 2 is formed of a luminaire fixing element 21, a shell structure 9, a locking element 11 and a lock catch mechanism 10.

The luminaire fixing element 21 is configured to secure or fix the luminaire 1 thereto. This can be performed by using any securing or fixing mechanism, such as a clamp, a clip, a screw or the like. For instance, the luminaire fixing element 21 may comprise one or more securing elements 22 that can be received by the luminaire for securing or fixing the luminaire thereto.

The shell structure 9 is configured to be connectable (or connected) to the luminaire fixing element 21. The shell structure 9 comprises a tube 91 having a cavity sized to allow passage of the fixed column 6. In other words, the tube 91 is configured to be placeable around the fixed column 6.

Although illustrated as separate components, in some examples, the shell structure 9 and the luminaire fixing element 21 together form a same component or element, e.g. are formed from a single piece of material. For instance, the shell structure 9 and the luminaire fixing element 21 may be produced in a single injection molding process.

The locking element 11 is positioned or positionable inside the tube 91. In other words, the locking element 11 is sized to fit inside the tube. The locking element comprises a magnetically-responsive material, that facilitates movement of the locking element 11 within the tube 91 (using a magnet) between at least a first and second position. In this way, a user or operator is able to control the position of the locking element 11 within the cavity of the tube 91 using a magnet (not shown).

Examples of suitable magnetically-responsive materials are well known to the skilled person, and may include any suitable ferromagnetic or ferromagnetic material. Suitable examples include iron, steel, cobalt, nickel (and alloys including the same), as well as magnetite. Other examples would be readily apparent to the skilled person.

The lock catch mechanism 10 is configured to secure the locking element 11 to the fixed column 6 when the locking element 11 is at the first position within the cavity. When the locking element 11 is secured to the fixed column, it restricts or prevents a movement of the shell structure 9 in at least a direction away from the mounting arrangement 4.

The lock catch mechanism 10 is also configured to disconnect or release the locking element 11 from the fixed column 6 when the locking element is at the second position within the cavity. When the locking element is disconnected from the fixed column, i.e. is in the second position, the locking element does not restrict a movement of the shell structure 9 in a direction away from the mounting arrangement.

It will be clear that restricting or not restricting the movement of the shell structure 9 in a direction away from the mounting arrangement 4 similarly restricts or does not restrict the movement of the connected luminaire fixing element 21 and any luminaire 1 secured thereto.

In this way, a user or operator is able to effectively move the locking element between a first position and a second position, to effectively switch the locking element 11 and lock catch mechanism 10 between a locked configuration and an unlocked configuration. This facilitates control of whether the luminaire 1 is mounted to the mounting arrangement 4 by use of a magnet, for improved ease of installation and maintenance/removal.

In the illustrated example, when the locking element 11 is inside the tube 91 and the tube 91 is placed around the fixed column 6, the movement of the locking element 11 between the first position and the second position will move the locking element toward and away from the mounting plate 5.

Thus, the first position may be a position towards a first end of the tube, and the second position may be towards a second (opposing) end of the tube. The first end of the tube may be designed to receive the fixed column 6 of the mounting arrangement 4.

This design may be achieved by capping the tube 91 with a first cover 92 and a second cover 13. The first cover 92 may have an aperture 94 sized to allow the passage of the fixed column through to the cavity of the tube 91. In some examples, the first cover 92 comprises a tapered or inclined recess, that angles or inclines towards the aperture 94 to the tube 91. This recess helps to guide the fixed column towards the aperture 94, and thereby into the tube. The second cover 13 may completely cover the second end of the tube and be configured to prevent entry of the fixed column 6 therein.

For improved ease of viewing the position of the locking element 11 within the tube 91, the second cover may be transparent or translucent. Alternatively, the second cover 13 may comprise one or more windows or gaps configured to allow viewing of the position of the locking element, but not sufficiently large to allow passage of the fixed column 6 therethrough, e.g. the second cover 13 may be a grid.

The cross-sectional view provided by Figure 3 perhaps best demonstrates the locking capability of the locking element and the lock catch mechanism.

In the illustrated scenario, in which the locking element 11 is at the first position, the shell structure 9 is effectively clamped between the mounting plate 5 of the mounting arrangement 4 and the locking element 11. The lock catch mechanism 10 restricts/prevents movement of the locking element 11 away from the mounting plate 5, thereby restricting/preventing a corresponding movement of the shell structure 9.

In preferable examples, the locking element 11 abuts the shell structure 9 to thereby restrict or prevent a movement of the shell structure in a direction away from the mounting arrangement. More specifically, the locking element 11 may abut a first cover 92 of the shell structure. The first cover 92 covers a first end of the cavity of the tube 91.

In some examples, the fixed column, the shell structure and the locking element are configured such that, when the lock catch mechanism secures the locking element to the fixed column, the shell structure abuts the mounting plate of the mounting arrangement to thereby restrict or prevent a movement of the shell structure in a direction towards the mounting arrangement. This embodiment is also illustrated in Figure 3, and further reduces a possible movement of the shell structure 9 with respect to the mounting plate.

In other examples, there may be some free space between the shell structure and the mounting plate, e.g. to allow for expansion/contraction of material with temperature.

The lock catch mechanism 10 provides a frictional force between the locking element 11 and the fixed column 6, when the locking element 11 is in the first position, to restrict/prevent a movement of the locking element 11 away from the mounting arrangement. This in turn restricts/prevents the movement of the shell structure 9 away from the mounting arrangement.

When the locking element 11 is moved to the second position, under the influence of a magnet, this frictional force is released. This allows the shell structure 9 to be moved away from the mounting arrangement 4, to thereby disconnect the luminaire 1 from the mounting arrangement 4.

A biasing element 12, such as a spring or elastic and compressible piece of material, is configured to bias the locking element 11 towards the first position. The biasing element 12 is connected between the locking element 11 and the shell structure 9. In the illustrated example, the biasing element 12 is connected between the locking element 11 and the second cover 13, forms part of the shell structure 9. Use of such a biasing element means that the default position for the locking element is the first position, such that, by default, a shell structure 9 inserted into the tube 91 would be mounted to the mounting arrangement 4 via the locking element 11. This increases an ease of installation.

The biasing element 12 also reduces a likelihood of unintended or unintentional movement of the locking element 11 away from the first position with respect to the shell structure after installation, e.g. caused by jostling or attempted movement of the luminaire 1 or shell structure 9 after installation. This increases a secureness of the restriction or prevention of the movement of the shell structure.

The magnetic force that moves the locking element 11 to the second position from the first position overcomes a biasing force applied by the biasing element 12 to the locking element when used.

The locking element 11 may comprise a second tube 14 having a second cavity that is sized to allow the passage of the fixed column therethrough. In this way, the shell structure 9 and locking element 11 may effectively be formed of two concentric tubes, one of which (the locking element 11) moves inside the other (the shell structure 9), and both of which can surround the fixed column 6.

In the illustrated example, the lock catch mechanism 10 comprises one or more balls 18 configured to move with the locking element 11. When the locking element is in the first position, the one or more balls engage with the fixed column and the locking element together, to thereby secure the locking element to the fixed column. However, the balls 18 may be replaced with other column engagement mechanisms, such as one or more sets of a spring and pin or wedges (e.g. to wedge the fixed column to the tube 91).

The illustrated lock catch mechanism 10 comprises one or more balls 18, each of which is sized to at least partially fit within a hole 19 of the second tube 14 of the locking element 11 and a groove 61 (e.g. a single groove, set of grooves or a respective groove for each ball) of the fixed column 6. Each hole of the (second tube 14 of the) locking element 11 is associated with a respective one of the one or more balls, i.e. houses or holds a respective ball. Each ball is able to roll or move through the associated hole. When the locking element is in the first position, each ball lies partially within a hole of the locking element and partially within a groove 61 of the fixed column. This restricts/prevents a movement of the locking element 11 in a direction in which the fixed column 6 lies, i.e. in a direction towards/away from the mounting plate 5.

The one or more balls 18 may be made of any suitable material, such as metal, plastic or ceramic. A steel ball is particularly effective as having a high level of strength and reusability. A magnetic ball may further increase an ease of moving the locking element (using a magnet) between the first and second positions. A magnetic ball is any ball made from a magnetically-responsive material, examples of which have been previously described.

When the locking element is in the first position, each ball may be positioned or biased such that each ball fits partially in a groove (e.g. a single groove or a respective groove) and partially in the hole of the locking element.

In one example, this can be achieved by configuring any holes (housing a ball) of the locking element to extend through the locking element 11. The depth of the holes, i.e. the thickness of the second tube 14, is less than a diameter of any ball. The shell structure 9 may then be configured to, when the locking element 11 is in the first position, press against any balls within any holes of the locking element against the fixed column 6. This can be achieved by tapering the internal surface of the tube 91, so that as the locking element 11 moves from the second position to the first position, the internal surface of the tube 91 comes into contact with any balls housed in any hole of the second tube, and gradually presses each ball against the fixed column 91.

This embodiment also provides additional point of contacts between the shell structure and the fixed column (via the ball(s)), to provide an additional frictional force that would further restrict a movement of the shell structure (and thereby a connected luminaire) away from the mounting plate.

For improved functionality, the external surface of the second tube 14 may also be tapered to match or geometrically compliment a shape of the tapered internal surface of the tube 91. This increases a reliability of the movement to the first position and increases the pressure applied by the internal surface of the tube 91 to the ball(s) held by the second tube 14.

Alternatively to providing holes passing through the second tube, the lock catch mechanism 10 may comprise one or more ball biasing elements, e.g. (helical) springs or an elastic piece of material such a sponge, configured or positioned to press a respective ball against the fixed column. This avoids a need for holes that extend the entire way through the second tube.

The groove(s) 61 of the fixed column 6 may be omitted. Rather, a friction provided by the fixed column 6 itself may be sufficient to prevent or restrict a movement of the locking element (and therefore the shell structure) in a direction away from the mounting plate. However, the groove(s) provide a more secure fixing of the shell structure.

An alternative to the ball-based locking mechanism 10 illustrated by the Figures is to use at least one biased column engagement mechanism, e.g. one or more pins mounted on springs. In such examples, each biased column engagement mechanism may, when the locking element 11 is in the first position, engage with a groove 61 (e.g. a single groove, set of grooves or a respective groove) of the fixed column. A frictional force between the pin and the column may prevent/restrict a movement of the locking element, and therefore the shell structure, away from the mounting plate. This frictional force can be overcome through use of a magnet to move the locking element from the first position to the second position.

If used in any herein described embodiment, a groove of the fixed column could be replaced by an alternative fixing point for the column. For instance, a protrusion or set of protrusions may act as one or more fixing points with which a ball or other locking mechanism may interact to fix or secure the locking element to the fixed column 6 when the locking element is in the first position.

It has previously been described how the locking arrangement comprises a luminaire fixing element 21 for securing the luminaire thereto.

As perhaps best illustrated by Figure 3, in the illustrated example, the luminaire fixing element 21 comprises a third tube 23 and a fixing ring 25. The third tube is sized to surround or house the shell structure 9 and is configured to connect to the luminaire (e.g. via one or more securing elements 22). The fixing ring 25 surrounds the third tube and extends through one or more side holes 24 of the third tube 23, to thereby clamp the shell structure 9 to the third tube 23.

Thus, the third tube 23 may have an inner size larger than the shell structure 9. The third tube has one or more side holes 24, e.g. 4 square holes, each side hole being on a side of the third tube. The fixing ring 25 may be a spring, having a circular shape that be sleeved around the third tube. The fixing ring may comprise one or more protrusions configured to extend through the side holes to press onto the shell structure 9 to limit the movement of the shell structure 9 with respect to the third tube 23 and thereby a connected luminaire.

The shell structure 9 may also comprise a flange element 93, which extends from the tube 91, particularly from the second end of the tube. The flange element is configured to restrict or prevent a movement of the fixing arrangement 21 (more specifically, the third tube) in a direction away from the mounting arrangement 4.

An alternative to the luminaire fixing element is a clipping system, that simply clips the luminaire to the shell structure. Another alternative is a screw and thread based system, in which the shell structure comprises one or more threads to which the luminaire can be screwed or secured thereto. Other appropriate alternatives will be readily apparent to the person skilled in the art.

For improved context understanding, the installation process for using the illustrated luminaire kit to fix a luminaire to a surface is hereafter described.

Firstly, the mounting arrangement 4 is fixed to the surface. Then, the luminaire 1 is fixed to the luminaire fixing element 21 of the locking mechanism 2. The fixed column is aligned with the aperture 94 of the first cover 92, and pushed into a first end of the tube 91 of the shell structure 9. The fixed column 6 passes through the aperture 94 of the first cover 92 and presses against the ball(s) 18 held by the locking element 11, which is initially biased by the biasing element 12 to the first position. As the fixed column pushes against the ball(s), the locking element 11 and the ball(s) 18 begin to move towards a second end of the tube, such that the locking element begins a movement to the second position. This causes the ball(s) 18 to move outwardly, towards a side of the tube 91 of the shell structure 9 as the internal surface of the tube 91 widens. When the groove(s) of the fixed column 6 enters the tube 91 of the shell structure 9 and reaches an appropriate position, the locking element is able to return to the first position as the ball(s) slot into or engage with the groove(s) of the fixed column. The ball(s) and locking element are, whilst the locking element is in the first position, thereafter secured to the fixed column 6, to thereby secure the connection between the shell structure and the mounting arrangement.

When maintenance or replacement of the luminaire 1 is required, a magnet is used to move the locking element towards the second end of the tube 91 of the shell 9 (i.e. towards the second position). The locking element 11 moves under the force of the magnet, and drives the ball(s) 18 to slide to the side of the shell structure. This releases the shell structure from the mounting arrangement. The fixed column 6 can then be removed from the aperture 94 of the first cover 92 by sliding the locking mechanism 2 out to facilitate replacement or maintenance of the luminaire. The locking element 11 will return to the first position, under the biasing of the biasing element 12, which is convenient for re-installation and use.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A luminaire kit (1000) comprising:
a luminaire (1);
a mounting arrangement (4) comprising a mounting plate (5), for fixing against a surface, and a fixed column (6) extending outwardly from the mounting plate;
a locking mechanism (2) comprising:
a luminaire fixing element (21) for securing the luminaire thereto;
a shell structure (9) coupled or couplable to the luminaire fixing element (21) and comprising a tube (91) having a cavity sized to allow the passage of the fixed column therein;
a locking element (11) sized to fit within the cavity and comprising a magnetically-responsive material configured to facilitate control of the movement of the locking element within the cavity, between at least a first and a second position, using a magnet; and
a lock catch mechanism (10) configured to, when the fixed column is positioned in the cavity of the tube:
secure the locking element (11) to the fixed column (6) when the locking element is at the first position within the cavity, wherein, when in the first position and secured to the fixed column, the locking element restricts or prevents a movement of the shell structure in a direction away from the mounting arrangement (4); and
disconnect the locking element (11) from the fixed column (6) when the locking element is at the second position within the cavity, wherein, when in the second position, the locking element does not restrict a movement of the shell structure in a direction away from the mounting arrangement.

2. The luminaire kit of claim 1, wherein the locking mechanism (2) further comprising a biasing element (12) configured to bias the locking element (11) towards the first position.

3. The luminaire kit of claim 2, wherein the biasing element (12) is a spring.

4. The luminaire kit of any of claims 1 to 3, wherein:
the lock catch mechanism (10) comprises one or more balls (18) configured to move with the locking element (11); and
when the locking element (11) is in the first position, the one or more balls engage the fixed column (6) and the locking element (11) together, to thereby secure the locking element to the fixed column.

5. The luminaire kit of claim 4, wherein:
the locking element (11) comprises a second tube (14) having a second cavity sized to allow the passage of the fixed column therethrough, wherein the second tube comprises one or more holes (19) on its sidewall; and
the one or more balls of the lock catch mechanism (10) are configured to move with the locking element (11),
the one or more balls consists of, for each hole of the second tube, a respective ball that is shaped to partially fit inside a respective hole of the second tube.

6. The luminaire kit of claim 5, wherein:
each hole (19) of the second tube (14) passes entirely through the second tube; and
for each of the one or more balls (18), the diameter of the ball is larger than the depth of hole of the second tube in which the ball is at least partially housed; and
an internal surface of the tube (91) is tapered towards the mounting arrangement (4) to thereby press each of the one or more balls, through a respective hole of the second tube, towards the fixed column (6) as the second tube (14) moves through the cavity of the tube towards the mounting arrangement.

7. The luminaire kit of any of claims 1 to 6, wherein:
the fixed column (6) comprises a respective one or more fixing points (61); and
the lock catch mechanism (10) is configured to, when the locking element (11) is in the first position, secure the locking element to the one or more fixing points of the fixed column and disconnect the locking element from the one or more fixing points when the locking element moves from the first position to the second position under the influence of a magnet.

8. The luminaire kit of any of claims 1 to 7, wherein the fixed column, the shell structure and the locking element are configured such that, when the lock catch mechanism secures the locking element to the fixed column, the locking element abuts the shell structure to thereby restrict or prevent a movement of the shell structure in a direction away from the mounting arrangement.

9. The luminaire kit of any of claims 1 to 8, wherein the fixed column, the shell structure and the locking element are configured such that, when the lock catch mechanism secures the locking element to the fixed column, the shell structure (9) abuts the mounting plate (5) of the mounting arrangement (4) to thereby restrict or prevent a movement of the shell structure in a direction towards the mounting arrangement.

10. The luminaire kit of any of claims 1 to 9, wherein the shell structure further comprises a first cover (92) positioned at a first end of the tube, having an aperture (94) sized to allow the passage of the fixed column through to the cavity.

11. The luminaire kit of claim 10, wherein the first cover comprises a recess surrounding and inclined towards the hole for guiding the fixed column towards the hole.

12. The luminaire kit of any of claims 1 to 11, wherein the luminaire fixing element comprises:
a third tube (23), sized to house the shell structure, and comprising one or more side holes (24); and
a fixing ring (25) positioned around the third tube and configured to extend through each of the side holes to clamp the shell structure when the shell structure is positioned within the third tube, to thereby restrict a movement of the shell structure and the locking element in a direction perpendicular to the direction of the fixed column.

13. The luminaire kit of claim 12, wherein the shell structure comprises a flange element (93) configured to restrict or prevent a movement of the fixing arrangement, with respect to the shell structure, when the shell structure is positioned in the third tube.

14. The luminaire kit of any of claims 1 to 13, wherein movement of the locking element between the first and second positions is a movement in a direction towards and/or away from the mounting arrangement.

15. The luminaire kit of any of claims 1 to 14, wherein a second end of the tube of the shell structure, being the end furthest from the mounting arrangement, is capped with a second cover (13).
